# EUROPÄISCHE PATENTSCHRIFT

(11) **EP 0 733 004 B1**
(45) Veröffentlichungstag und Bekanntmachung des Hinweises auf die Patenterteilung: **11.03.1998**
(21) Anmeldenummer: 95905104.6
(22) Anmeldetag: 22.12.1994
(51) Int. Cl.: B60R 13/08

(54) **MODULARER SCHALLDÄMMENDER BELAG**
MODULAR SOUND-ABSORBING COVERING
REVETEMENT INSONORISANT MODULAIRE

(30) Priorität: 22.12.1993 DE 4343970
(43) Veröffentlichungstag der Anmeldung: 25.09.1996
(73) Patentinhaber: Stankiewicz GmbH, D-29352 Adelheidsdorf (DE)
(72) Erfinder: HOFFMANN, Manfred, D-29364 Langlingen-Nienhof (DE); OEHL, Heinz-Dieter, D-29227 Celle (DE); RIGGERS, Edmund, D-29320 Hermannsburg (DE)
(74) Vertreter: Melzer, Wolfgang, Dipl.-Ing.
(86) Internationale Anmeldenummer: EP9404277
(87) Internationale Veröffentlichungsnummer: WO9517320

(56) Entgegenhaltungen:
- GB-A- 2 213 097
- GB-A- 2 259 449
- PATENT ABSTRACTS OF JAPAN vol. 7, no. 157 (M-227) (1302) 9. Juli 1983 & JP,A,58 063 542 (NISSAN JIDOSHA) 15. April 1983
- PATENT ABSTRACTS OF JAPAN vol. 8, no. 132 (M-303) (1569) 20. Juni 1984 & JP,A,59 032 569 (NISSAN JIDOSHA) 22. Februar 1984

## Beschreibung

Die Erfindung betrifft einen Belag zum Auskleiden akustisch angeregter Flächen, insbesondere von Kraftfarzeuginnenräumen und ein Verfahren zur Herstellung des Belages.

Ein Belag gemäß dem Oberbegriff des Anspruches 1 ist aus der GB-A-22 13 097 bekannt. Dort ist ein Laminat vorgesehen, bestehend aus einer oberseitigen Deckschicht und mehreren anderen darunterliegenden Schichten, wobei die der akustisch angeregten Fläche gegenüberliegende Schicht entsprechend geformt ist und schalldämmende Eigenschaften aufweisen kann. Wesentlich ist die feste Verbindung zwischen den Schichten sowie die feste Verbindung zwischen der Auskleidung und der gegenüberliegenden akustisch angeregten Fläche. Dies wird insbesondere erreicht durch einen wärmeexpandierbaren Schaum, der dabei gleichzeitig die feste einer Verschweißung entsprechende Verbindung erzielt. Der beste Belag erfordert für jede Teilfläche einer akustisch angeregten Fläche einen gesonderten Belag, der darüberhinaus nicht recyclefähig ist, wobei bei Entfernung des Belages Klebereste verbleiben, die sehr aufwendig entfernt werden müssen.

Verformte und hinterschäumte Beläge, die konturfolgend dem Fahrzeugboden angepaßt sind, zur Schallisolation im Fahrgastraum von Fahrzeugen, sind seit längererem bekannt. Z.B. beschreibt die DE-OS 20 06 741 ein mehrschichtiges, schalldämmendes Bauteil, das aus einem verformten Teppich und einer entsprechend verformten Schwerschicht besteht, die miteinander verbunden sind und das auf einer Schicht aus dynamisch weichem Werkstoff, wie z.B. Schaumstoff, an der Karosserie des Fahrzeuges schwimmend gelagert ist. Ein solches System übernimmt neben der Aufgabe der Schallisolation natürlicherweise durch die Teppichoberfläche auch Dekorfunktionen. In Weiterentwicklung von Teppichen mit Hinterschäumungen wurden diese Hinterschäumungen auch so ausgeführt, daß sie Versorgungskanäle zur Aufnähme von Leitungen für Fahrzeugelektroinstallationen integriert enthalten, wie das in der DE-PS 37 02 629 ausgeführt ist.

Die strengen Anforderungen an die Recyclefähigkeit der Produkte führten zu einem Ersetzen der konventionellen Dämpfungsbeläge zur Vibrationsdämpfung der Karosserie, speziell in der Bodengruppe, durch Schallisolationen mit integriertem Teppich bzw. dazu, die Dämpfungsbeläge wiederentfernbar zu gestalten. In Verfolgung des Gedankens der Wiederentfernbarkeit von Dämpfungsbelägen, sei es zu Reparaturzwecken oder im Sinne des Recyclings, weist der Stand der Technik die DE-OS 35 10 932 aus, die die adhäsive Gestaltung der Oberflächen von Schallisolationsteilen zum Inhalt hat. Die dazu notwendigen filmartigen Beschichtungen bestehen im wesentlichen aus Zweikomponenten-Polyurethan mit Untervernetzung. Sie sind in der Adhäsion so eingestellt, daß sie einerseits eine kraftschlüssige Ankopplung an die Karosseriebleche ermöglichen, die zur Körperschalldämpfung notwendige Voraussetzung ist und daß andererseits ein zerstörungsfreies Wiederentfernen ermöglicht wird. Schließlich wurde gemäß der DE-OS 37 10 731 ein Dämpfungsschaum mit adhäsiven Oberflächen verfügbar, der ebenfalls wieder entfernbar ist und die akustische Funktion der konventionellen Dämpfungsbeläge zum größten Teil übernimmt.

Hinterschäumungen von verformten Teppichen im geschlossenen Werkzeug sind Stand der Technik. Die so hergestellten Produkte werden in größeren Stückzahlen an die Automobilhersteller geliefert und in der Serienfertigung eingesetzt.

Aus Sicht der technischen Akustik stellen die beschriebenen Schallisolationen Masse-Feder-Systeme dar, mit dem Teppich, meist in Verbindung mit einer Schwerschicht als Masse und Schaum als akustische Feder. Daher sind die dynamischen Kennwerte des Schaumes, wie Elastizitätsmodul und Verlustfaktor für Biegeschwingungen, wichtige Kennwerte für die akustische Wirkung des jeweiligen Systems, was zur Folge hat, daß zur Gewährleistung gleichbleibender Qualität Untersuchungen dieser Parameter vorzunehmen sind. Hierzu zwingt auch die DIN-ISO 9000 ff, wie sie im Zertifizierungsverfahren für Zulieferbetriebe zur Anwendung kommt.

Ganzflachige Überprüfungen der Akustik-Parameter, also der Test eines gesamten, hinterschäumten Teppichs, werden wegen des damit verbundenen großen Aufwandes nicht durchgeführt. Es kann auch davon ausgegangen werden, daß sich wegen der Verformung des Prüfobjektes Rückwirkungen auf die Meßdaten selbst ergeben, so daß die relevanten Werte nicht sicher und reproduzierbar ermittelt werden könnten. Daher werden heute kleine Probekörper mit den Abmessungen von Länge x Breite mit wenigen Zentimetern aus definierten, möglichst planen Bereichen im Teppich-Schaum-System herausgenommen, klimatisch konditioniert und nach dem Hubschwingungsversuch oder dem Biegeschwingungsversuch (DIN-53440) auf Elastizitätsmodul und Verlustfaktor überprüft. In jedem Fall muß also ein komplett verformter, vollständig hinterschäumter Teppich vorliegen, bevor eine solche Prüfung vorgenommen werden kann. Das Abstellen von Fehlchargen ist daher schon aus diesem Grund recht aufwendig und stört den Produktionsablauf erheblich.

Mit Hilfe der Hinterschäumtechnik im geschlossenen Werkzeug können zwar Schallisolationsteile mit hoher akustischer Effektivität hergestellt werden, jedoch erfordern die Fertigungslinien wegen der hohen Stückzahlen für die Belieferung der Großserien in der Pkw-Herstellung erhebliche Investitionen. Ebenso erfordern Änderungen in der Anlagefläche, z.B. der Bodenkontur oder der Stirnwand, während der Serienfertigung zeit- und kostenaufwendige Anpassungen, zumindest für das Hinterschäumwerkzeug.

Der Erfindung liegt daher die Aufgabe zugrunde, einen Belag, insbesondere zur Auskleidung von Fahrzeugeninnenräumen, der eine flexible Anpassung an verschiedene akustisch angeregte Anlageflächen mit geringen Umrüstkosten ermöglicht und ein Verfahren zur Herstellung des erfindungsgemäßen Belags, anzugeben.

Die Aufgabe wird hinsichtlich des Belags durch die Merkmale des Anspruchs 1 und hinsichtlich des Verfahrens durch die Merkmale des Anspruchs 12 gelöst.

Der Erfindung liegt die Erkenntnis zugrunde, daß sich eine wesentlich flexiblere Anpassung an die zu bestückende Kontur der akustisch angelegten Fläche, insbesondere der Bodenkontur oder der Stirnwand eines Kraftfahrzeuginnenraumes, ergibt, wenn der Belag modular aufgebaut ist. An einer oberseitigen Deckschicht, die vorzugsweise als Teppichschicht ausgebildet sein kann, sind daher mehrere Auskleidungsmodule angeordnet, die zumindest teilweise schalldämmende Eigenschaften aufweisen. Die Auskleidungsmodule sind dabei derart geformt, daß sie auf der jeweils gegenüberliegenden Teilfläche der akustisch angeregten Fläche bündig zur Auflage gebracht werden können.

Die Ansprüche 2 bis 11 sowie 13 und 14 betreffen vorteilhafte Weiterbildungen der Erfindung.

Entsprechend Anspruch 2 können die Auskleidungsmodule an der Deckschicht und/oder der auszukleidenden akustisch angeregten Fläche fest, aber lösbar, angebracht werden. Beim Recycling ergibt sich dabei der Vorteil, daß der Belag in einfacher Weise von der auszukleidenden Fläche getrennt werden kann und weiterhin der aus unterschiedlichen Wertstoffen bestehende Belag in einfacher Weise in seine Bestandteile zerlegt werden kann. Die lösbare Verbindung kann nach Anspruch 3 mittels einer adhäsiven Beschichtung oder anderer geeigneter Befestigungsvorrichtungen, wie einer Klettverbindung, Druckknöpfen oder dgl. ausgebildet sein.

Der Belag kann weiter entsprechend Anspruch 4 vorteilhaft zur Aufnahme von Versorgungsleitungen, Lüftungskanälen, elektronischer Komponenten u.s.w. geeignete nischenartige Verformung oder Vertiefung aufweisen.

Zur Verbesserung der schalldämmenden Eigenschaften können die schalldämmenden Auskleidungsmodule an der Grenzfläche zu der oberseitigen Deckschicht eine zusätzliche biegeweiche Schwerschicht gemäß Anspruch 6 aufweisen, so daß das Masse-Feder-System effizienter ausgebildet ist.

Als Materialien für die Auskleidungsmodule eignen sich insbesondere Schaumstoffe, Vliesmaterialien, Naturfasern oder dgl., die nach Anspruch 7 zu Matten verdichtet sein können. Zur Verbesserung der Zugänglichkeit im Reparaturfall kann die Deckschicht entsprechend Anspruch 10 mittels Filmscharniere der dgl. mit den Auskleidungsmodulen verbunden sein. Zur Erleichterung des Aufbringens des Belags kann dieser mit Montage-Fixierungen versehen sein, die in entsprechende an der auszugleichenden akustisch angeregten Fläche vorzusehende oder vorhandene Gegenstücke eingreifen.

Das erfindungsgemäße Verfahren zur Herstellung des Belags kann durchgängig in einer einheitlichen Fertigungslinie entsprechend Anspruch 13 ausgeführt werden. Es kann jedoch auch vorteilhaft sein, lediglich die Deckschicht und die vorgeformten Auskleidungsmodule entsprechend Anspruch 14 für die Endmontage zur Verfügung zu stellen und die Fertigstellung des Belages unmittelbar vor dem Einbau desselben vorzunehmen.

Die Erfindung wird anhand der in der Zeichnung dargestellten Ausführungsbeispiele nachfolgend beispielhaft erläutert. Es zeigen:
- Fig. 1: eine schematische Darstellung zur Erläuterung der Herstellung und des Aufbaus des erfindungsgemäßen Belages,
- Fig. 2: eine schematische Darstellung zur Erläuterung einer vorteilhaften Ausbildung des erfindungsgemäßen Belages,
- Fig. 3: eine schematische Darstellung zur Erläuterung der Montage des erfindungsgemäßen Belages.

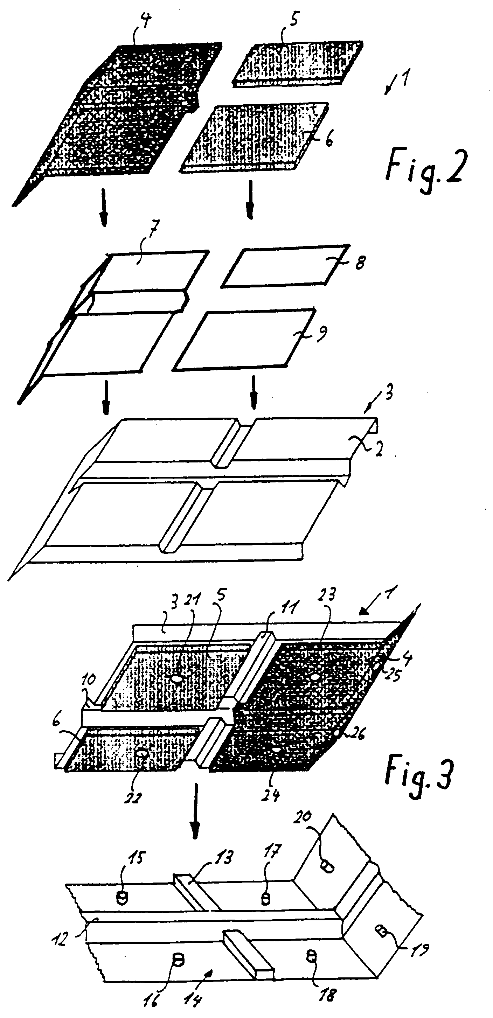

Zunächst sei der Aufbau des erfindungsgemäßen Belags anhand von Fig. 2 erläutert.

Bei dem erfindungsgemäßen Belag 1 wird die Rückseite 2 der Deckschicht 3 als Koppelfläche für die verschiedenen Auskleidungsmodule 4 - 6 benutzt. Da demzufolge keine Hinterschäumung im geschlossenen Werkzeug vorgesehen ist, können preiswerte Teppiche als Deckschicht 3 eingesetzt werden, die in Konsequenz keinerlei aufwendige Sperren gegen Durchschäumer benötigen, die die Teppichoberfläche verschmutzen und das Teil unbrauchbar machen. Die als akustische Feder wirkenden Auskleidungsmodule 4, 5, 6 können aus Schaumstoff 4 oder Vlies 5, 6 (die Vliese können Synthetikvliese oder Baumwollfaservliese sein), aber auch aus nachwachsenden Naturfasern erzeugt sein. Diese werden in separater Fertigung hergestellt und lassen sich daher in benötigter Menge für kurze Taktzeiten am Band in einfacher Weise bereitstellen. Die Fig. 2 zeigt den modular aufgebauten Belag in einer Übersicht. Vorteilhaft kann zwischen der Deckschicht 3 und den Auskleidungsmodulen 4, 5, 6 eine die Masse vergrößernde Schwerschicht 7, 8, 9 vorgesehen sein.

Es bestehen somit vielfältige Möglichkeiten, den akustischen Erfordernissen durch unterschiedliche Materialeinstellungen innerhalb eines Teppichteils zu entsprechen. So ist aus der Druckschrift Advanced Noise Control in Automotive Engineering, Technomic Publishing Company, USA, 1987 (auch Stankiewicz GmbH-Information Nr. 130, 1987) bekannt, daß die Schallübertragung vom Motorraum in den Fahrgastraum keineswegs gleichmäßig über die Fläche verteilt erfolgt, sondern daß vielmehr mit Hilfe der Intensitätsmeßtechnik örtlich abgegrenzte Schallquellen und Schallsenken geortet werden können. Im Bereich der Schallquellen ist der Schallflußvektor in den Fahrgastraum hineingerichtet, und im Bereich der Schallsenken weist der Vektor in umgekehrte Richtung, also aus dem Fahrgastraum hinaus. Durch Maßnahmen, wie z.B. das Einbringen von Luftpolsterfolien in Akustikschäume lassen sich gezielt akustische Kurzschlüsse, auch hydrodynamische Kursschlüsse genannt, herstellen, die einen Energieausgleich auf kurzem Wege ermöglichen. Diese Energieanteile gelangen nicht mehr an das Ohr des Fahrers bzw. auch der Fahrgäste.

Außerdem wird durch die Erfindung ein Instrument an die Hand gegeben, durch ausgewählte Parameter für Schaum 4 oder Vlies 5, 6, auch in Kombination beider Materialien, individuelle Bedämpfungen der unterschiedlich starken Schallquellen zu erreichen und auch den Schallabfluß über die Senken zu verstärken.

Durch das Verfahren selbst lassen sich nicht akustische wirksame Module für Elektronikteile, Luftführungen u. ä. vor der Montage des Akustikteppichs im Fahrzeugboden und Stirnwandbereich unterbringen, so daß der abdeckende Belag 1 mit den Auskleidungsmodulen 4 - 6 nur noch auf die Bodengruppe aufgelegt werden muß und durch die spezielle Gestaltung der Deckschichtrückseite 2 und ggf. auch durch die adhäsive Beschichtung der Oberflächen der Auskleidungsmodule einerseits eine kraftschlüssige Ankopplung gegeben ist, andererseits jedoch die Deckschicht 3 und die Auskleidungsmodule sich leicht wieder einzeln entnehmen lassen. Sofern im Reparaturfall Ersatzteile benötigt werden, können diese kostengünstig als Einzelteile bereitgestellt werden. Durch den modularen Belag 1 ist gleichzeitig auch ein einfaches Recycling möglich.

Die Ankopplung der Auskleidungsmodule 4 - 6 an die Deckschicht 3 läßt sich z.B. über Klettverschlußsysteme herstellen sowie über adhäsive Beschichtungen der Oberflächen, vorteilhaft auch über wärmeaktivierbare adhäsive Beschichtungen, insgesamt gesehen also vorzugsweise über wieder lösbare Verbindungen. Vorgesehen sind auch örtlich begrenzte Umschäumungen der Auskleidungsmodule 4 - 6 in Art einer Versiegelung bei gleichzeitiger Ankopplung an die Koppelfläche.

Das Zwischenschalten von biegeweichen Schwerschichten 7 - 9 zur Schalldämmung zwischen Deckschichtunterseite 2 und den verschiedenen Modulen 4 - 6 erhöht die akustische Wirkung des Gesamtsystems. Dem Erfindungsgedanken folgend werden die Verbindungen zwischen den verschiedenen Modulen 4 - 6 und den Schwerschichten 7 - 9 sowie zwischen den Schwerschichten 7 - 9 und der Deckschichtrückseite 2 in gleicher Weise wie oben beschrieben vorgenommen. Da die Schwerschichten 7 - 9 genügend Festigkeit besitzt, können zwischen den Schwerschichten 7 - 9 und der Deckschicht 3 auch Druckknopfverbindungen vorgesehen werden.

Fur z.B. Servicezwecke wird Zugänglichkeit zu den einzelnen Modulen 4 - 6 verlangt. In die Deckschicht lassen sich zu diesem Zweck Filmscharniere einbringen, so daß diesem Gesichtspunkt Rechnung getragen wird. Zur sicheren Positionierung des modularen Belags 1, wie in Fig. 3 dargestellt, können Montagefixierungen 10, 11 vorgesehen werden, die z.B. auffallende Erhebungen 12, 13 oder Vertiefungen im Fahrzeugboden 14 und der Stirnwand ausnutzen, die ihre Entsprechung 10, 11 in den vorgefertigten Auskleidungsmodulen 4 - 6, z.B. dem Formschaum 4 haben. Es können auch separat im Stirnwand-/Bodenbereich eingebrachte Fixpunkte, z. B. Stifte 15 - 20, für die sichere Montage benutzt werden, die in entsprechende in dem Belag vorgesehene Gegenstücke 21 - 26 eingreifen.

Vorteilhaft gestalten sich durch die vorliegende Erfindung die Methoden zur Qualitätssicherung, da alle Teile, insbesondere aber die Module 4 - 6, einzeln geprüft werden können. Sofern eine zerstörungsfreie Werkzeugprüfung nicht möglich ist, hält sich der Wertverlust bei den Modulen 4 - 6 sehr in Grenzen, weil das Kompletteil 1 selbst nicht zerstört werden muß. Die Überprüfung der Belagsqualität (eines Teppichs) wird branchenüblich im Rahmen der Fertigung selbst vorgenommen, so daß für das Zusammenfügen zum modularen Belag 1 im Regelfall lediglich noch eine optische Prüfung der Farbe vorgenommen werden muß.

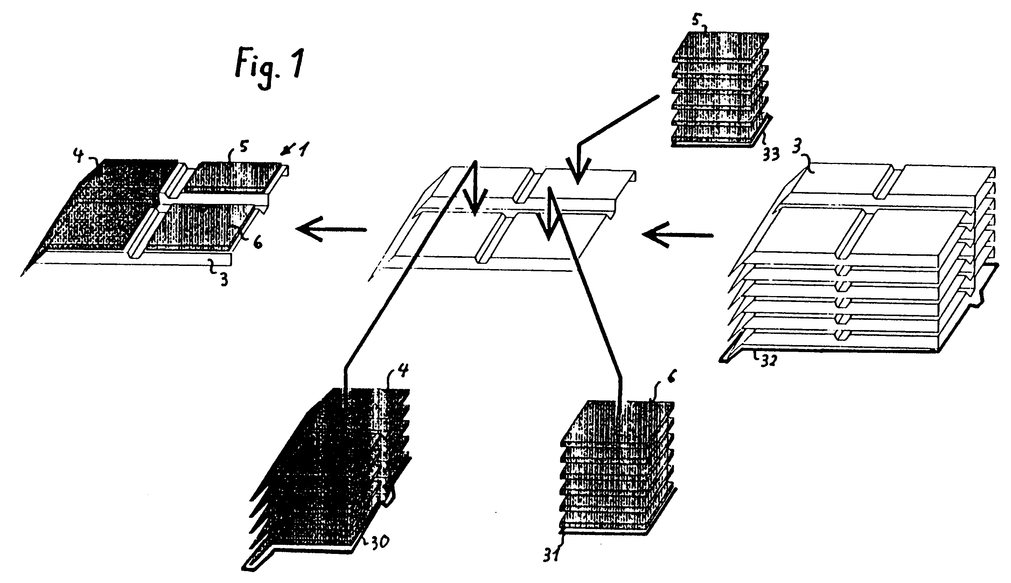

Durch die Erfindung werden zwei Verfahren für die Herstellung des modularen Belags 1 erschlossen. Einerseits kann der Belag 1 komplett beim Hersteller der Schallisolation produziert und dem Anwender in der Fahrzeugindustrie zugeliefert werden. Eine andere in Fig. 1 dargestellte Vorgehensweise besteht darin, daß die schalldämmenden Module 4 beim Hersteller der Schallisolationen zusammengefügt werden und die akustischen, nicht wirksamen Module 5, 6 durch den Fahzzeughersteller vorbereitet werden, so daß die Komponenten 3 - 6 nur noch in der beschriebenen einfachen Weise zusammengefügt werden müssen.

Die Deckschichtverformung und der Beschnitt erfolgen in separaten Anlagen nach dem bekannten Stand der Technik, wobei die Schwerschichten 7 - 9 auch in direkter Verbindung mit der Deckschicht 3 verformt werden kann. Das Recycling einer Deckschicht-Schwerschicht-Kombination ist technisch in verhältnismäßig einfacher Weise durchführbar. Die Fraktionen lassen sich getrennt nach Schwerschichten 7 - 9 und Deckschicht 3, z. B. Teppichanteilen, zurückgewinnen.

Zum Herstellen des modularen Belags werden die Module 4 - 6 und die Deckschicht 3, wie in Fig. 1 gezeigt, zweckmäßig in vorgeformten Trägerschalen 30 - 33 bereitgestellt, wobei die Formgebung der Kontur des Boden-/ Stirnwandbereiches entspricht. Die einzelnen Module 4 - 6 werden vorzugsweise über frei programmierbare Roboter an die vorbestimmten Positionen gebracht, was z.B. dann vorteilhaft ist, wenn das Gesamtsystem beim Hersteller der Schallisolation erstellt wird. Sofern das Zu sammenfügen beim Fahrzeugproduzenten erfolgen soll oder in Kombination mit dem Schallisolationshersteller, muß die Deckschichtrückseite 2 als Koppelfläche mit den bereits beschriebenen Haftkopplern versehen werden. Unter Einbeziehung der Fixpunkte 15 - 20 für die Montage ist dann eine sichere Positionierung des Belags 1 möglich.

Ein wesentlicher Vorteil der Erfindung besteht darin, daß an einem einzigen Fertigungsband unterschiedliche Beläge hergestellt werden können z.B. durch raschen Wechsel der Trägerschalen 30 - 33 und Anwahl der zugehörigen Programme für die Bestückung. Durch Vorfertigen und Bereitstellen der einzelnen Module 4 - 6 am Band sind gegenüber dem Stand der Technik deutlich verkürzte Taktzeiten möglich. Auf Veränderungen der Module 4 - 6 während der Serienfertigung kann flexibel und schnell reagiert werden.

Auf die Hinterschäumtechnik kann zumindest weitestgehend verzichtet werden, wodurch einerseits preiswerte, nicht mehr hinterschäumsichere Teppiche verwendet werden können und andererseits das Zusammenfügen der Module sowohl beim Hersteller von Schallisolationen als auch beim Hersteller der Fahrzeuge erfolgen kann.

## Patentansprüche

1. Belag (1) zum Auskleiden akustisch angeregter Flächen (14), insbesondere von Fahrzeuginnenräumen, mit
einer oberseitigen Deckschicht (3) und einer an der Unterseite (2) der Deckschicht (3) fest anhaftenden Auskleidung, die derart geformt ist, daß sie zu der gegenüberliegenden akustisch angeregten Fläche (Fahrzeugboden 14) bündig ist und schalldämmende Eigenschaften aufweist,
**dadurch gekennzeichnet,**
daß an der Unterseite (2) der Deckschicht (3) mehrere Auskleidungsmodule (4 - 6) fest anhaften,
daß die Auskleidungsmodule (4 - 6) derart geformt sind, daß sie auf der gegenüberliegenden Teilfläche der akustisch angeregten Fläche (Fahrzeugboden 14) bündig zur Auflage bringbar ist, und
daß zumindest eines der Auskleidungsmodule (4 - 6) schalldämmende Eigenschaften aufweist.

2. Belag (1) nach Anspruch 1,
**dadurch gekennzeichnet,**
daß die Auskleidungsmodule (4 - 6) an der Deckschicht (3) und/oder der akustisch angeregten Fläche (14) fest, aber lösbar, anhaften.

3. Belag nach Anspruch 2,
**dadurch gekennzeichnet,**
daß an der Verbindung zwischen den Auskleidungsmodulen (4 - 6) und der Deckschicht (3) und/oder der akustisch angeregten Fläche (14) eine lösbare Beschichtung, insbesondere eine adhäsive Beschichtung, eine Klettverbindung, Druckknöpfe oder dgl. vorgesehen ist/sind.

4. Belag nach einem der Ansprüche 1 bis 3,
**dadurch gekennzeichnet,**
daß einzelne Auskleidungsmodule (4 - 6) Nischen zur Aufnahme von Versorgungsleitungen, Lüftungskanälen und/oder elektronischen Komponenten oder dgl. aufweisen.

5. Belag nach einem der Ansprüche 1 bis 4,
**dadurch gekennzeichnet,**
daß die Auskleidungsmodule (4 - 6) mit schalldämmenden Eigenschaften als akustisch wirksame Masse-Feder-Systeme ausgebildet sind.

6. Belag nach einem der Ansprüche 1 bis 5,
**dadurch gekennzeichnet,**
daß zusätzlich eine biegeweiche Schwerschicht (7-9) vorzugsweise zwischen der Unterseite (2) der Deckschicht (3) und der Oberseite der Auskleidungsmodule (4 - 6) vorgesehen ist.

7. Belag nach einem der Ansprüche 1 bis 6,
**dadurch gekennzeichnet,**
daß die Auskleidungsmodule (4 - 6) aus Schaumstoffen, Vliesmaterialien, Naturfasern oder dgl. bestehen, die zu Matten verdichtet sein können.

8. Belag nach einem der Ansprüche 1 bis 7,
**dadurch gekennzeichnet,**
daß die Deckschicht (3) zusätzliche schalldämmende Eigenschaften aufweist.

9. Belag nach einem der Ansprüche 1 bis 8,
**dadurch gekennzeichnet,**
daß die oberseitige Deckschicht (3) eine Teppichschicht ist.

10. Belag nach einem der Ansprüche 1 bis 9,
**dadurch gekennzeichnet,**
daß die Deckschicht (3) mittels insbesondere filmartig ausgebildeten Scharnieren mit den Auskleidungsmodulen (4 - 6) verbunden ist.

11. Belag nach einem der Ansprüche 1 bis 10,
**dadurch gekennzeichnet,**
daß die Auskleidungsmodule (4 - 6) Montage-Fixierungen (21 - 26) aufweisen, die in entsprechende an der akustisch angeregten Fläche (14) vorzusehende Gegenstücke (15 - 20) eingreifen.

12. Verfahren zur Herstellung eines Belags (1) nach einem der Ansprüche 1 bis 11 mit folgenden Verfahrensschritten:
- Ausbilden und Formen der Deckschicht (3),
- Ausbilden und Formen der Auskleidemodule (4 - 6),
- Anbringen von Befestigungselementen an den Auskleidemodulen (4 - 6) und/oder der Deckschicht (3) oder Beschichten der Oberseite der Auskleidemodule (4 - 6) und/oder der Unterseite (2) der Deckschicht (3) mit einer lösbaren Verbindung wie einer adhäsiven Beschichtung,
- Zusammensetzen des Belags (1) durch Aufbringen der Auskleidemodule (4 - 6) auf die Unterseite (2) der Deckschicht (3) und kraftschlüssiges Verbinden derselben.

13. Verfahren nach Anspruch 12,
**dadurch gekennzeichnet,**
daß sämtliche Verfahrensschritte in einer automatisierten Fertigungslinie ausgeführt werden.

14. Verfahren nach Anspruch 12,
**dadurch gekennzeichnet,**
daß die beiden ersten Verfahrensschritte zeitlich und räumlich getrennt von dem Zusammensetzen des Belags (1) erfolgen.

## Claims

1. Covering (1) for lining acoustically excited surfaces (14), in particular of interior vehicle compartments having,
an upper cover layer (3) and a lining, firmly adhering to the underside (2) of the cover layer (3), which is so formed that it is flush fitting to the confronting acoustically excited surface (vehicle floor 14) and has sound deadening properties,
characterised in that,
a plurality of lining modules (4-6) firmly adhere to the underside (2) of the cover layer (3),
in that,
the lining modules are so formed that they can be brought into place on confronting partial surfaces of the acoustically excited surface (vehicle floor 14) in a flush fitting manner, and
in that,
at least one of the lining modules (4-6) has sound-deadening properties.

2. Covering (1) according to claim 1,
characterized in that,
the lining modules (4-6) firmly but removably adhere to the cover layer (3) and/or the acoustically excited surface (14).

3. Covering (1) according to claim 2,
characterized in that,
at the bonding between the lining modules (4-6) and the cover layer (3) and/or the acoustically excited surface (14) there is or are provided a releasable coating, in particular an adhesive coating, a hook and loop fastening, press-studs or the like.

4. Coating according to any of claims 1 to 3,
characterized in that,
the individual lining modules (4-6) have niches for receiving supply lines, ventilation channels and/or electronic components or the like.

5. Covering according to any of claims 1 to 4,
characterized in that,
the lining modules (4-6) are formed, with sound-deadening properties, as acoustically effective mass-spring systems.

6. Covering according to any of claims 1 to 5,
characterized in that,
there is additionally provided a soft bendable weighting layer (7-9) preferably between the underside (2) of the cover layer (3) and the upper side of the lining modules (4-6).

7. Covering according to any of claims 1 to 6,
characterized in that,
the lining modules (4-6) are of foam material, non-woven fabrics, natural fibres or the like, which can be compressed to mats.

8. Covering according to any of claims 1 to 7,
characterized in that,
the cover layer (3) has additional sound-deadening properties.

9. Covering according to any of claims 1 to 8,
characterized in that,
the upper side cover layer (3) is a carpeting layer.

10. Covering according to any of claims 1 to 9,
characterized in that,
the cover layer (3) is bonded with the lining modules (4-6) by means of hinges which are in particular formed in a film-like manner.

11. Covering according to any of claims 1 to 10,
characterized in that,
the lining modules (4-6) have mounting fitments (21-26) which engage in corresponding counterparts (15-20) to be provided at the acoustically excited surface (14).

12. Method of manufacturing a covering (1) according to any of claims 1 to 11, having the following process steps:
- forming and shaping the cover layer (3)
- forming and shaping the lining modules (4-6)
- application of attachment elements to the lining modules (4-6) and/or the cover layer (3) or coating of the upper side of the lining modules (4-6) and/or the underside (2) of the cover layer (3) with a releasable bonding such as an adhesive coating,
- assembly of the covering (1) by application of the lining modules (4-6) on to the underside (2) of the cover layer (3) and adherently bonding the same.

13. Method according to claim 12,
characterized in that,
all process steps are carried out in one automated production line.

14. Method according to claim 12,
characterized in that,
the first two process steps are effected temporally and spatially separately from the assembly of the covering (1).

## Revendications

1. Garniture (1) pour le revêtement de surfaces (14), excitées acoustiquement, en particulier d'habitacles de véhicules, comportant une couche de couverture (3) supérieure et un revêtement adhérant fermement à la face inférieure (2) de la couche de couverture (3), qui a une forme telle qu'il s'applique tout contre la surface (plancher 14 du véhicule) opposée, excitée acoustiquement et présente des propriétés d'isolation phonique, caractérisée en ce que sur la face inférieure (2) de la couche de couverture (3) adhèrent fermement plusieurs modules de revêtement (4 à 6), en ce que les modules de revêtement (4 à 6) ont une forme telle qu'ils peuvent être amenés en application assemblés sur la partie de surface opposée de la surface (plancher 14 du véhicule), excitée acoustiquement et en ce qu'au moins l'un des modules de revêtement (4 à 6) présente des propriétés d'isolation phonique.

2. Garniture (1) selon la revendication 1, caractérisée en ce que les modules de revêtement (4 à 6) adhèrent fermement, mais de manière amovible, à la couche de couverture (3) et/ou à la surface (14) excitée acoustiquement.

3. Garniture selon la revendication 2, caractérisée en ce qu'il est prévu à la liaison entre les modules de revêtement (4 à 6,) et la couche de couverture (3) et/ou la surface (14) excitée acoustiquement, une couche de revêtement amovible, en particulier une couche adhésive, un assemblage à accrochage, des boutons-pression ou similaire.

4. Garniture selon l'une des revendications 1 à 3, caractérisée en ce que des modules de revêtement (4 à 6) individuels présentent des niches destinées à recevoir des conduites d'alimentation, des canaux d'aération et/ou des composants électroniques ou similaires.

5. Garniture selon l'une des revendications 1 à 4, caractérisée en ce que les modules de revêtement (4 à 6) à propriétés d'isolation phonique sont conformés en systèmes à masse et ressort agissant acoustiquement.

6. Garniture selon l'une des revendications 1 à 5, caractérisée en ce qu'en supplément une couche lourde (7 à 9), flexible, est prévue, de préférence entre la face inférieure (2) de la couche de couverture (3) et la face supérieure des modules de revêtement (4 à 6).

7. Garniture selon l'une des revendications 1 à 6, caractérisée en ce que les modules de revêtement (4 à 6) sont constitués de mousses, de non-tissés, de fibres naturelles ou similaires, qui peuvent être compactés en mats.

8. Garniture selon l'une des revendications 1 à 7, caractérisée en ce que la couche de couverture (3) présente des propriétés d'isolation phonique supplémentaires.

9. Garniture selon l'une des revendications 1 à 8, caractérisée en ce que la couche de couverture (3) supérieure est une couche de tapis.

10. Garniture selon l'une des revendications 1 à 9, caractérisée en ce que la couche de couverture (3) est assemblée avec les modules de revêtement (4 à 6), au moyen de charnières, en particulier du type à film.

11. Garniture selon l'une des revendications 1 à 10, caractérisée en ce que les modules de revêtement (4 à 6) comportent des fixations de montage (21 à 26), qui s'engagement dans des contre-pièces (15 à 20) correspondantes, à prévoir sur la surface (14) excitée acoustiquement.

12. Procédé de fabrication d'une garniture (1) selon l'une des revendications 1 à 11 avec les étapes de procédé suivantes :
- réalisation et formage de la couche de couverture (3),
- réalisation et formage des modules de revêtement (4 à 6),
- application d'éléments de fixation sur les modules de revêtement (4 à 6) et/ou de la couche de couverture (3) ou application sur la face supérieure des modules de revêtement (4 à 6) et/ou sur la face inférieure (2) de la couche de couverture (3) d'une liaison amovible telle qu'une couche de revêtement adhésif,
- assemblage de la garniture (1) par application des modules de revêtement (4 à 6) sur la face inférieure (2) de la couche de couverture (3) et assemblage par force de ceux-ci.

13. Procédé selon la revendication 12, caractérisé en ce que toutes les étapes de procédé sont réalisées dans une ligne de fabrication automatisée.

14. Procédé selon la revendication 12, caractérisé en ce que les deux premières étapes du procédé s'effectuent séparément, dans le temps et dans l'espace, de l'assemblage de la garniture (1).
